# FASCICULE DE BREVET EUROPEEN

(11) **EP 1 607 818 B1**
(45) Date de publication et mention de la délivrance du brevet: **10.01.2007**
(21) Numéro de dépôt: 04291443.2
(22) Date de dépôt: 09.06.2004
(51) Int. Cl.: G05D 23/13, F01P 7/16

(54) **Vanne thermostatistique pour un circuit de refroidissement**
Thermostatventil für einen Kühlmittelkreislauf
Thermostatic valve for a cooling circuit

(43) Date de publication de la demande: 21.12.2005
(73) Titulaire: VERNET S.A., 91290 Arpajon Cédex (FR)
(72) Inventeur: Roman, Jean-Michel, 77930 Perthes en Gatinais (FR); Mabboux, Lionel, 91700 Sainte Geneviève des Bois (FR)
(74) Mandataire: Jacobson, Claude

(56) Documents cités:
- EP-A- 0 694 681
- FR-A- 2 601 719
- US-A- 5 482 010

## Description

La présente invention concerne une vanne thermostatique comportant un élément thermostatique à matière dilatable adapté pour commander les déplacements d'un clapet de régulation du passage d'un fluide à travers la vanne.

Dans de nombreuses applications du domaine fluidique, notamment pour le refroidissement du moteur thermique, de telles vannes sont utilisées pour répartir un fluide entrant dans différentes voies en fonction des caractéristiques, notamment de température, dans lesquelles ce fluide entrant se trouve.

Dans les vannes actuellement utilisées, l'extrémité libre du piston de l'élément thermostatique est souvent reliée rigidement au clapet régulant l'écoulement du fluide dans la vanne, de sorte que l'écartement de la vanne par rapport à son siège est commandé par l'évolution de la température du fluide dans lequel baigne l'élément thermostatique.

Certains régimes de fonctionnement des moteurs thermiques peuvent entraîner des surpressions dans les circuits d'eau de refroidissement, alors que la vanne thermostatique n'est pas ouverte par sollicitations thermiques pour cause de températures trop faibles. Ces surpressions peuvent être dommageables pour certains composants du circuit.

Dans US-A-5 482 010 ou EP-A-0 694 681, on a proposé des agencements thermo-pressostatiques destinés à éviter de trop fortes surpressions du côté du clapet opposé à celui où le clapet est relié au piston de l'élément thermostatique de régulation. Ces agencements s'appliquent ainsi exclusivement aux vannes à au moins trois accès de fluide et équipées de deux clapets. Les éventuelles différences de pression au sein de la vanne, provoquées par la commande thermostatique simultanée des deux clapets, sont alors corrigées par une régulation préssostatique d'un des clapets dit « clapet de bipasse » ou « clapet de court-circuit », qui consiste à entraîner ce clapet dans le sens contraire à celui commandé par la dilatation de la cire de l'élément thermostatique. Les vannes décrites dans les documents précités ne présentent en revanche aucun aménagement en vue de réguler une augmentation de pression du fluide autour de l'élément thermostatique.

Le but de la présente invention est de proposer une vanne thermostatique qui limite les risques de détérioration en cas d'élévation excessive de la pression du fluide dans la vanne, du côté du clapet de régulation où ce clapet est relié au piston de l'élément thermostatique de la vanne,

A cet effet, l'invention a pour objet une vanne thermostatique pour un circuit de refroidissement, notamment associé à un moteur thermique, comportant un boîtier principal qui forme un orifice d'entrée d'un fluide et au moins un orifice de sortie de ce fluide, un clapet mobile par rapport au boîtier et adapté pour réguler le passage du fluide entre l'orifice d'entrée et l'orifice de sortie, un siège de réception du clapet, fixe par rapport au boîtier, et un élément thermostatique pourvu d'un corps qui contient une matière dilatable et d'un piston mobile par rapport au corps, ce corps étant fixe par rapport au boîtier, caractérisée en ce qu'elle comporte une pièce de liaison entre le clapet et le piston, laquelle pièce de liaison est solidaire du clapet et délimite un logement borgne de réception du piston, le fond du logement formant une butée pour le piston lorsque la différence de pression de part et d'autre du clapet est inférieure à une valeur prédéterminée, liant ainsi cinématiquement le clapet et le piston l'un à l'autre, tandis que la paroi du logement forme une surface de contact glissant avec le piston lorsque cette différence de pression est supérieure à ladite valeur prédéterminée, permettant ainsi le déplacement du clapet par rapport au piston suivant la direction de déplacement du piston.

Lorsque la pression du côté du clapet où ce clapet est relié au piston de l'élément thermostatique devient trop importante par rapport à celle régnant de l'autre côté du clapet, la pièce de liaison et, par conséquent, le clapet coulissent de manière à écarter le clapet de son siège, permettant ou augmentant l'écoulement du fluide dans la vanne. Lorsque ce différentiel de pression retombe à un niveau toléré par la vanne, des moyens élastiques peuvent rappeler le clapet, et donc la pièce de liaison, vers son siège. Lorsque, en revanche, les conditions de pression du fluide demeurent tolérables pour les circuits, les déplacements du clapet sont commandés par le piston de l'élément thermostatique, comme pour les vannes de l'art antérieur.

Suivant d'autres caractéristiques de cette vanne, prises isolément ou selon toutes les combinaisons techniquement possibles :
- la pièce de liaison est emmanchée à force dans une couronne intérieure du clapet ;
- la pièce de liaison est venue de matière avec une partie intérieure du clapet;
- elle comporte un ressort de rappel du clapet vers le siège, la valeur prédéterminée de pression étant fonction du réglage de ce ressort ;
- le piston et la pièce de liaison délimitent entre eux un espace fibre de communication entre le fond du logement borgne et le débouché de ce logement sur l'extérieur ;
- l'espace libre est délimité en partie par un méplat ménagé le long du piston ;
- elle comporte un étrier rigide qui délimite le siège de réception du clapet et qui est solidarisé d'une part au boîtier principal et d'autre part au corps de l'élément thermostatique ;
- elle comporte un boîtier secondaire relié de façon étanche au boîtier principal au niveau d'un de ses orifices d'entrée ou de sortie, en enserrant une bride de solidarisation de l'étrier ;
- elle comporte un couvercle relié de façon étanche au boîtier principal et adapté pour solidariser une bride de l'étrier au boîtier principal ;
- le corps de l'élément thermostatique est disposé dans le boîtier principal sur le trajet d'écoulement du fluide entre l'orifice d'entrée de ce fluide et au moins un des orifices de sortie de ce fluide ;
- le boîtier principal délimite une voie de circulation d'un fluide autre que celui régulé par le clapet, le corps de l'élément thermostatique étant disposé dans le boîtier principal sur le trajet de cet autre fluide ; et
- elle comporte à la fois des moyens de chauffage électrique, qui comprennent une enveloppe plongée au moins en partie dans la matière dilatable de l'élément thermostatique et une résistance chauffante logée dans l'enveloppe et adaptée pour être connectée à une alimentation électrique, et une embase rapportée de connexion électrique, adaptée pour positionner des plots de connexion électrique de la résistance chauffante et solidarisée de façon étanche à l'enveloppe de telle sorte que l'ensemble thermostatique, incluant l'élément thermostatique, les moyens de chauffage et l'embase de connexion électrique, est dans une configuration pré-assemblée dans laquelle cet ensemble est apte à être monté d'un seul tenant dans le boîtier principal.

L'invention sera bien comprise à la lecture de la description qui va suivre, donnée uniquement à titre d'exemple et faite en se référant aux dessiris sur lesquels:
- la figure 1 est une vue schématique en coupe longitudinale d'un élément thermostatique classique, à comtrande électrique ;
- la figure 2 est une vue d'un élément thermostatique sur lequel, est rapportée une embase de connexion électrique, au niveau du détail cerclé II sur la figure 1 ;
- la figure 3 est une vue en plan selon la flèche III indiquée sur la figure 2 ;
- la figure 4 est une vue schématique en coupe longitudinale d'une vanne thermostatique selon l'invention, équipée de l'élément thermostatique et de l'embase de la figure 2 ;
- la figure 5 est une vue à plus grande échelle du détail cerclé V sur la figure 4 ;
- la figure 6 est une coupe prise selon le plan VI-VI indiqué sur la figure 5 ;
- la figure 7 est une vue à plus grande échelle du détail cerclé VII sur la figure 4 ;
- la figure 8 est une coupe selon le plan VIII-VIII indiqué sur la figure 7 ;
- la figure 9 est une vue analogue à la figure 7, la vanne étant représentée dans un état de fonctionnement différent ; et
- les figures 10 à 14 sont des vues analogues à la figure 4, représentant respectivement des variantes de la vanne thermostatique.

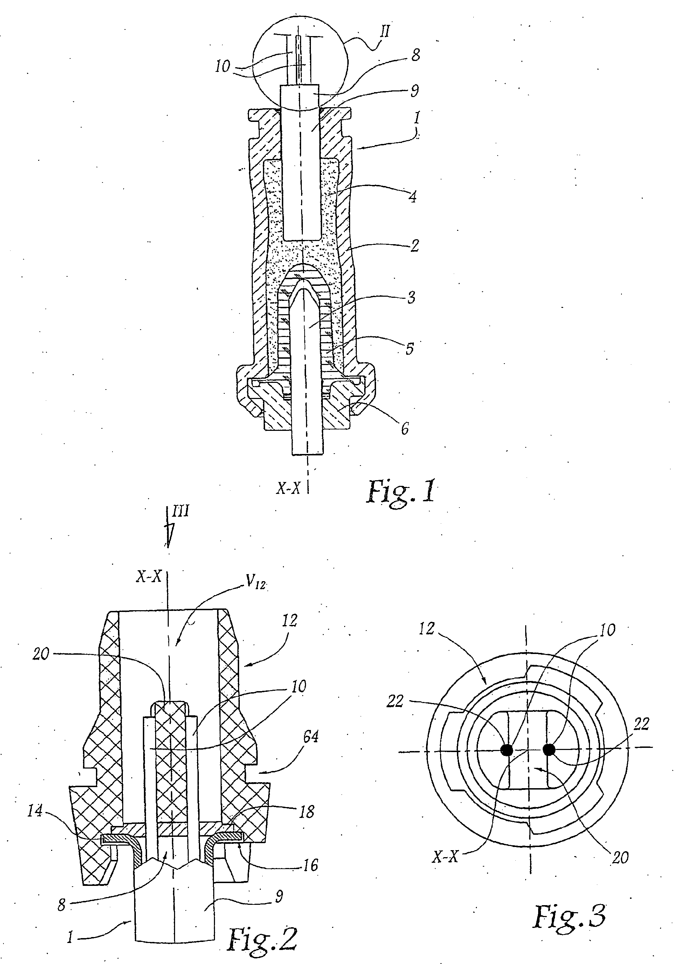

Sur la figure 1 est représenté un élément thermostatique connu, référencé 1 et destiné à être immergé dans un fluide de température variable.

L'élément thermostatique 1 comporte essentiellement un corps 2, constitué dans un matériau bon conducteur de la chaleur, par exemple métallique, et un piston 3 sous forme d'une tige mobile par rapport au corps 2. Le corps 2 délimite intérieurement une cavité de réception de manière dilatable 4, généralement de la cire, confinée de manière étanche par une membrane en élastomère 5 retenue fermement par rapport au corps 2 par un couvercle 6.

Lorsque la température du fluide dans lequel baigne l'élément thermostatique 1 augmente, la dilatation de la cire 4 provoque l'entraînement du piston 3 suivant la direction longitudinale X-X de l'élément thérmostatique. Lorsque la cire se contracte, des moyens de rappel non représentés sont généralement prévus pour ramener le piston 3 à l'intérieur du corps 2.

Pour commander de façon complémentaire ou indépendante de la température du fluide dans lequel baigne l'élément thermostatique 1, des moyens de chauffage électrique 8 sont prévus. Ils se présentent sous la forme d'une enveloppe rigide 9 traversant de part en part le fond du corps 2 opposé au couvercle 6 et plongeant en partie dans la cire 4. A l'intérieur de l'enveloppe est logée une résistance électrique chauffante dont seuls les plots 10 de connexion électrique sont visibles sur la figure 1A. On comprend que, lorsque la résistance chauffante est alimentée en courant, la cire 4 se dilate et le piston 3 est déplacé.

Sur les figures 2 et 3 est représentée une embase de connexion électrique 12.

L'embase 12 se présente sous la forme d'une pièce d'un seul tenant, obtenue par exemple par moulage d'une matière plastique, de forme essentiellement tubulaire dont l'axe longitudinal est sensiblement co-axial à l'axe longitudinal X-X de l'élément thermostatique 1 lorsque l'embase est rapportée sur cet élément.

A cet effet, dans ce mode de réalisation, l'extrémité libre de l'enveloppe 9 forme un collet annulaire 14 reçu dans une rainure annulaire 16 formée dans la paroi intérieure de l'embase 12. Entre le collet et l'embase est interposé un joint d'étanchéité 18 monté dans un état comprimé.

Le joint 18 est traversé de part en part par les plots 10 de connexion électrique de la résistance chauffante logée dans l'enveloppe 9, de façon à ce que ces plots soient disposés dans le volume intérieur V₁₂ de l'embase. Les plots sont positionnés de part et d'autre d'un support intérieur 20 formé par l'embase 12. Le support 20 s'étend longitudinalement suivant un plan diamétral de l'embase 12, en reliant des parties de paroi intérieure diamétralement opposées, comme représenté sur la figure 3. Dans chaque flanc du support 20 est formée une rainure 22 de réception des plots de connexion électrique 10, le profil de ces rainures 22 étant adapté pour retenir les plots par complémentarité de formes.

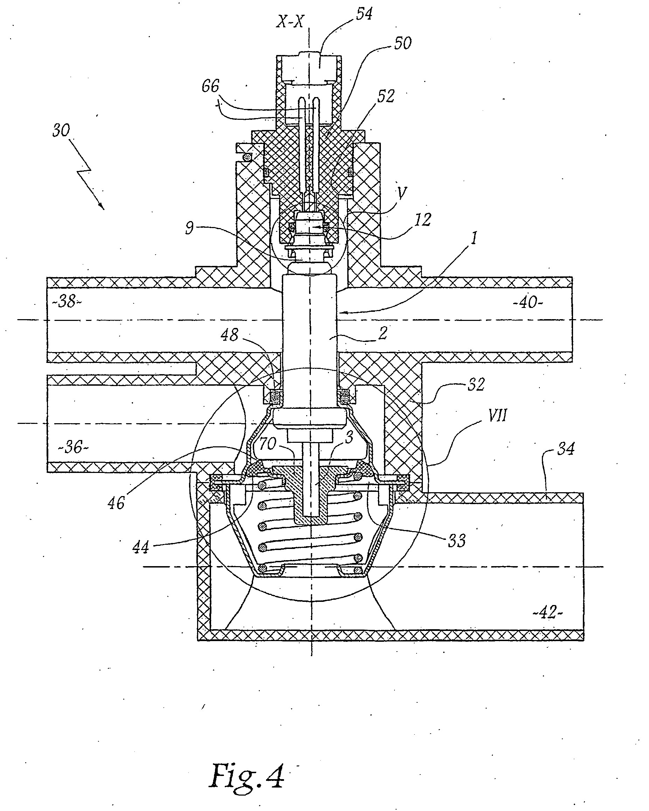

Sur la figure 4 est représentée une vanne thermostatique 30 adaptée pour équiper un circuit de refroidissement, notamment pour un moteur thermique de véhicule automobile. Cette vanne comporte un boîtier principal 32 délimitant un orifice 33 au niveau duquel est rapporté, de manière étanche, un boîtier secondaire 34. Le boîtier 32 délimite trois conduits, référencés 36, 38 et 40. Le boîtier secondaire délimite un seul conduit référencé 42. A titre d'exemple, lorsque la vanne 30 est utilisée dans un circuit de refroidissement d'un moteur thermique, le conduit 36 correspond à une entrée d'eau froide destinée à communiquer, sous certaines conditions détaillées ci-après et à travers l'orifice 33, avec le conduit 42 qui forme une sortie d'eau froide en direction d'un échangeur thermique ; le conduit 38 forme quant à lui une entrée d'huile circulant dans une autre voie du circuit de refroidissement et qui communique librement avec le conduit 40 qui forme une sortie pour cette huile.

La vanne 30 est équipée de moyens de régulation du débit d'eau passant du conduit d'entrée 36 au conduit de sortie 42 par l'orifice 33, sous la forme d'un clapet d'obturation 44 associé à un siège correspondant 46. Le clapet 44 est adapté pour s'écarter ou se rapprocher du siège 46, de telle sorte que, lorsque le clapet est en appui contre son siège, le débit de fluide passant du conduit 36 au conduit 42 est sensiblement nul et, lorsque le clapet 44 est totalement écarté du siège 46, le fluide alimentant le conduit 36 passe pratiquement librement dans le conduit de sortie 42.

Pour commander le déplacement du clapet 44 par rapport au siège 46, la vanne 30 est équipée de l'élément thermostatique 1 sur lequel est rapportée l'embase de connexion 12. Une majeure partie du corps 2 de l'élément thermostatique 1 est placée dans l'écoulement d'huile circulant du conduit d'entrée 38 au conduit de sortie 40, tandis que le reste du corps 2 est reçu dans un orifice 47 formé dans la paroi du boîtier 32 séparant le conduit d'eau 36 des conduits d'huile 38 et 40. La section transversale de l'orifice 47 est sensiblement complémentaire de celle du corps 2 et des moyens d'étanchéité 48 disposés autour du corps 2 évite toute communication fluidique entre la voie d'huile et la voie d'eau.

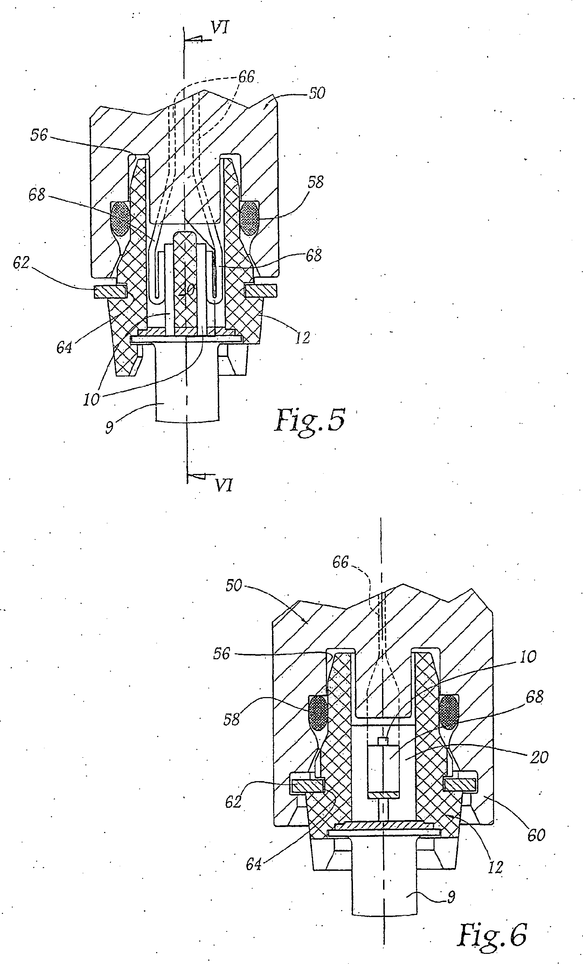

Pour assurer l'alimentation électrique de la résistance chauffante des moyens 8, ainsi que pour maintenir mécaniquement l'embase de connexion 12 et l'enveloppé 9 de l'élément thermostatique 1 qui y est reliée vis-à-vis du boîtier 32, un connecteur 50 est fixé de façon étanché dans une ouverture complémentaire 52 du boîtier 32, qui s'étend suivant l'axé longitudinal X-X de l'élément thermostatique. Dans sa partie tournée vers l'exterieur du boîtier, le connecteur 50 est muni d'une cavité 54 de réception d'une fiche d'alimentation électrique. Dans sa partie opposée, le connecteur 50 coiffe l'embase de connexion 12, comme représenté plus en détail sur les figures 5 et 6.

Plus précisément, le connecteur 50 forme un logement 56 de réception partielle de l'embase de connexion 12, un joint d'étanchéité annulaire 58 étant interposé entre la face extérieure de l'embase et la paroi du connecteur délimitant ce logement. Le connecteur 50 est équipé de plusieurs languettes flexibles 60 d'accrochage de l'embase, réparties suivant sa périphérie. Ces languettes sont adaptées pour venir en prise sur un insert annulaire 62 rigide, retenu axialement par rapport à l'embase dans une gorge périphérique correspondante 64 (voir figure 2) ménagée dans la paroi extérieure de l'embase.

Le connecteur 50 est parcouru longitudinalement par une paire de conducteurs électriques 66 qui s'étendent depuis la cavité 54 de réception d'une fiche d'alimentation, jusqu'au logement 56 de réception de l'embase, en formant à l'intérieur de ce logement des broches conductrices élastiques 68 adaptées pour venir en contact avec les plots 10 de la résistance chauffante lorsque le connecteur est fixé sur l'embase 12.

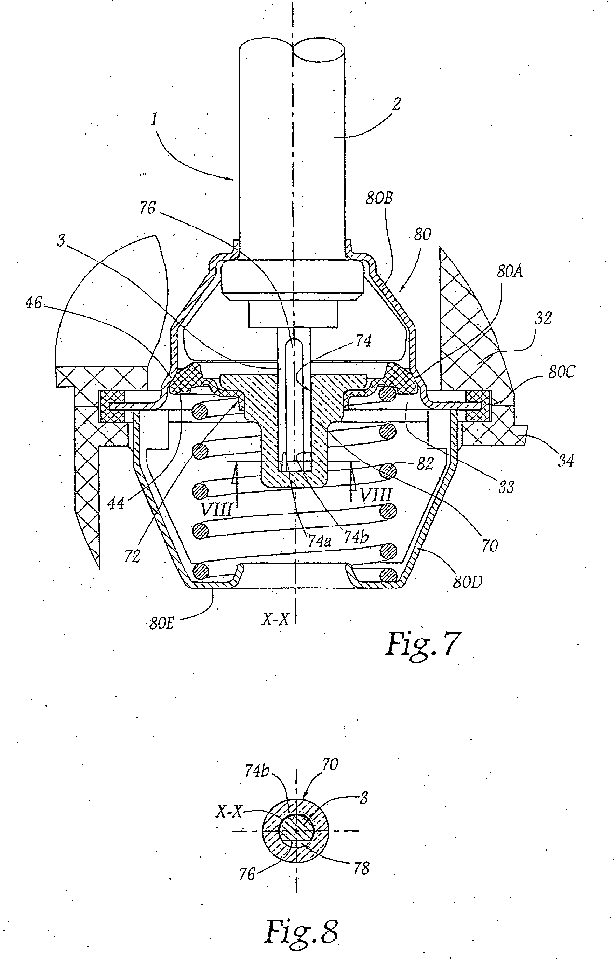

Le piston 3 de l'élément thermostatique 1 est quant à lui relié au clapet 44 de la vanne 30 par l'intermédiaire d'une pièce de liaison 70. Comme représenté plus en détail sur la figure 7, la pièce 70 est liée en translation suivant l'axe X-X avec une couronne intérieure 72 du clapet 44. Par exemple, la pièce 70 est emmanchée à force dans cette couronne. De la sorte, la pièce 70 et le clapet 44 sont liés cinématiquement l'un à l'autre.

Dans sa partie courante, la pièce 70 présente un alésage borgne 74 co-axial à l'axe X-X, adapté pour recevoir la tige formant le piston 3 de l'élément thermostatique 1. L'extrémité libre du piston est adapté pour venir en appui contre le fond 74a de l'alésage 74 de façon à permettre la transmission entre ce piston et la pièce de liaison 70, d'un effort suivant l'axe X-X et dirigé à l'opposé du corps 2.

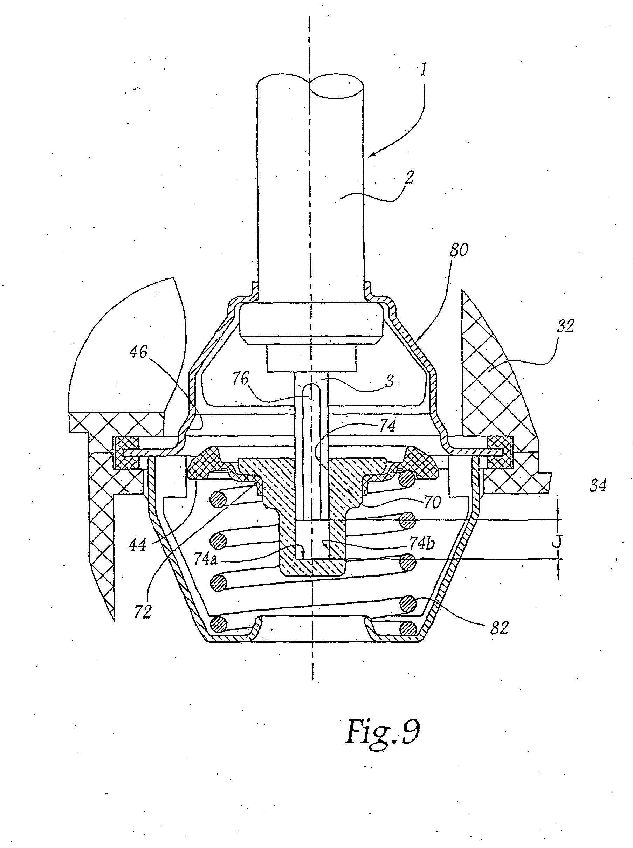

Comme représente sur la figure 8, le piston 3 présente un méplat 76 qui délimite avec la paroi 74b de l'alésage 74 un espace libre référencé 78 s'étendant jusqu'à l'extrémité libre du piston. Le contact entre le piston 3 et la paroi 74b est prévu glissant de sorte qu'il existe un degré de liberté en translation suivant l'axe X-X entre le piston et la pièce 70. En particulier, lorsque la pression régnant dans le conduit d'entrée d'eau 36 est supérieure à celle régnant dans le conduit de sortie 40 d'une valeur prédéterminée, le différentiel de pression exercé sur la pièce 70 est à même de provoquer son glissement vis-à-vis du piston, ce dernier guidant le mouvement de la pièce 70. Dans cette configuration, représentée sur la figure 9, un jeu J se forme entre le fond de l'alésage 74 et l'extrémité libre du piston 3. L'espace libre 78 ménagé dans le méplat 76 permet alors la libre introduction de fluide dans le jeu J ainsi formé et évite que la pièce 70 ne soit immobilisée sur le piston 3 dans la configuration de la figure 7 par effet ventouse.

La vanne 30 comporte également un étrier 80 qui délimite le siège 46 et qui relie rigidement le corps 2 de l'élément thermostatique 1 au boîtier principal 32 de la vanne. Plus précisément, l'étrier 80 comporte une couronne annulaire 80A qui définit le siège 46, des branches 80B qui relient le corps de l'élément thermostatique à la couronne 80A, une bride annulaire 80C qui est enserrée de façon étanche entre les boîtiers 32 et 34, et des branches 80D qui forment à leur extrémité libre des plans 80E d'appui pour un ressort de rappel 82. Ce ressort 82 est interposé entre le clapet 44 et l'étrier 80 de façon à rappeler ce clapet sur son siège 46.

Entre chacune des branches 80B, des ajours permettent le passage du fluide depuis le conduit d'entrée 36 jusqu'à la zone de la couronné 80A. De même, les branches 80D définissent entre elles des orifices permettant le passage du fluide depuis la zone de la couronne 80A vers le conduit de sortie 40, lorsque le clapet 44 est écarté du siège 46.

L' assemblage de la vanne 30 est le suivant :

Le connecteur 50 est d'abord solidarisé au boîtier 32 en étant amené depuis l'extérieur du boîtier 32 dans l'ouverture 52. La solidarisation étanche du connecteur au boîtier est par exemple obtenue par collage, par un emmanchement à force ou la pose d'une agrafe.

On introduit ensuite a l'intérieur du boîtier 32, à travers l'orifice 33, l'ensemble thermostatique formé de l'élément thermostatique 1 et de l'embase de connexion 12 pourvu de l'insert 62, équipé du clapet 44, de l'étrier 80 et du ressort 82. L'embase de connexion et le corps 2 de l'élément thermostatique sont introduits dans l'orifice 47 suivant un mouvement de translation selon l'axe X-X, jusqu'à ce que les extrémités libres des branches 80B compriment les moyens d'étanchéité 48. Les languettes 60 viennent alors en prise avec l'insert 62 de l'embase 12 et les broches 68 viennent en contact électrique avec les plots 10.

Puis, le boîtier secondaire 34 est solidarisé de façon étanche au boîtier principal 32, bloquant ainsi la bride 80C de l'étrier 80.

Le fait de rapporter sur l'élément thermostatique l'embase de connexion électrique avant son montage dans la vanne permet de disposer d'un ensemble thermostatique pré-assemblé facile à introduire dans le boîtier 32, aucune opération de connexion supplémentaire n'étant nécessaire pour retenir ou positionner les plots de connexion des moyens de chauffage électrique vis-à-vis du boîtier. De plus, l'isolation des parties électriques de l'ensemble est réalisée, au moins en partie, avant le montage de l'ensemble dans la vanne et peut donc être testée avant montage. Le connecteur 50 coopère avec l'embase 12 pour permettre l'alimentation électrique de l'élément thermostatique depuis l'extérieur du boîtier. La mise en place du connecteur est simple et permet, en une seule opération lors du montage de l'ensemble pré-assemblé, de connecter électriquement les plots de connexion retenus par l'embase, tout en assurant l'étanchéité totale de l'embase.

En fonctionnement, la vanne 30 est parcourue par une voie d'huile qui entre par le conduit 38 et sort par le conduit 40, ainsi que par une voie d'eau qui entre par le conduit 36 et qui est susceptible, suivant les conditions de fonctionnement de la vanne, de sortir par le conduit 40. Initialement, on considère que la vanne 30 est dans la configuration représentée à la figure 4, c'est-à-dire avec le clapet 44 en appui étanche sur le siège 46.

Lorsque la température de l'huile augmente, la cire 4 contenue dans le corps 2 de l'élément thermostatique 1 se dilate, ce qui provoque le déplacement du piston 3. Ce dernier entraîne alors en translation suivant l'axe X-X la pièce de liaison 70, et par là le clapet 44. Les conduits 36 et 42 sont alors mis en communication. Lorsque la température de l'huile diminue, le ressort 82 rappelle le clapet 44 contre son siège 46.

indépendamment ou en complément de la sollicitation en température générée par l'huile, une source d'énergie électrique raccordée au connecteur 50, via sa cavité 54 de réception d'une fiche, peut être commandée pour alimenter la résistance chauffante des moyens de chauffage 8 de l'élément thermostatique 1. Ainsi, lorsque l'alimentation électrique des plots 10 est assurée, la cire 4 se dilate et provoque la mise en communication des conduits 36 et 42 comme ci-dessus.

Par ailleurs, lorsque la pression régnant dans le conduit d'entrée 36 est supérieure à la pression régnant dans le conduit de sortie 40 d'une valeur prédéterminée notamment fonction du réglage du ressort 82, le différentiel de pression provoque l'entraînement en translation de la pièce 70, qui glisse alors le long du piston 3 en entraînant le clapet 44, ce qui met en communication les conduits 36 et 42. Tout dommage du circuit d'eau résultant d'une surpression est ainsi évité grâce à la vanne 30.

En d'autres termes, le clapet 44 assure une fonction thermopressostatique, comme représenté à la figure 9.

Le méplat 76 évite à la fois la création d'un jeu J en sous-pression entre la pièce 70 et le piston 3 qui pourrait limiter la liberté de glissement de la pièce le long du piston par un effet de ventouse, et le piégeage de fluide dans le jeu J qui pourrait empêcher le retour rapide et complet du piston jusqu'au fond de l'alésage 74 lors du rappel du clapet 44 par le ressort 82 une fois le différentiel de pression revenu au-dessous de la valeur seuil prédéterminée.

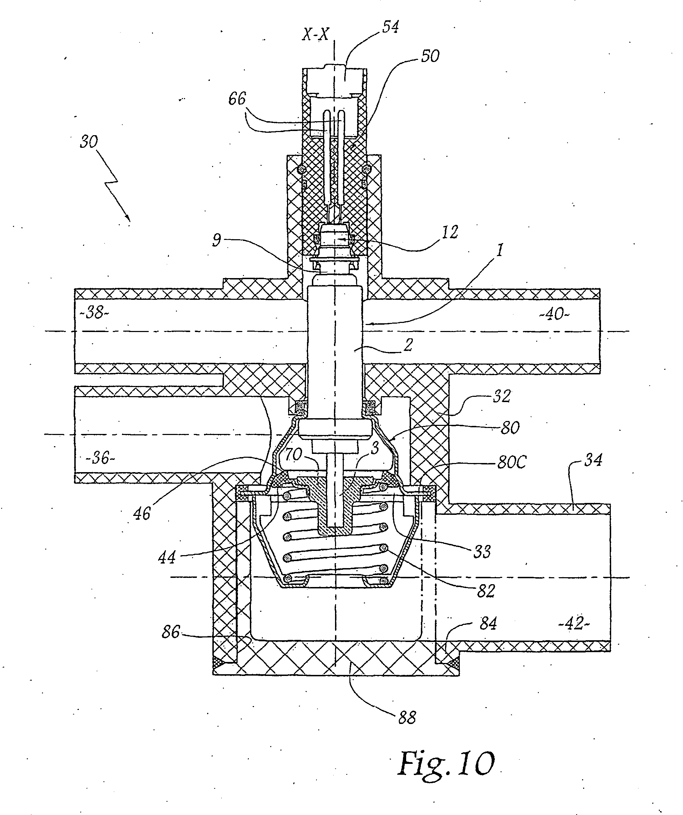

Sur la figure 10 est représentée une variante de la vanne 30, qui se distingue essentiellement de la vanne de la figure 4 par la forme de son boîtier principal 32. En effet, celui-ci forme d'un seul tenant à la fois les conduits 36, 38, 40 et 42. Pour permettre la mise en place de l'ensemble thermostatique constitué de l'élément 1 et de l'embase 12, équipé du clapet 44 et de l'étrier 80, la paroi du boîtier opposée à l'ouverture 52 présente une ouverture 86 sensiblement co-axiale à l'ouverture 52. Un couvercle 88 est en outre prévu pour obturer de façon étanche l'ouverture 86 et pour retenir mécaniquement la bride 80C vis-à-vis du boîtier 32.

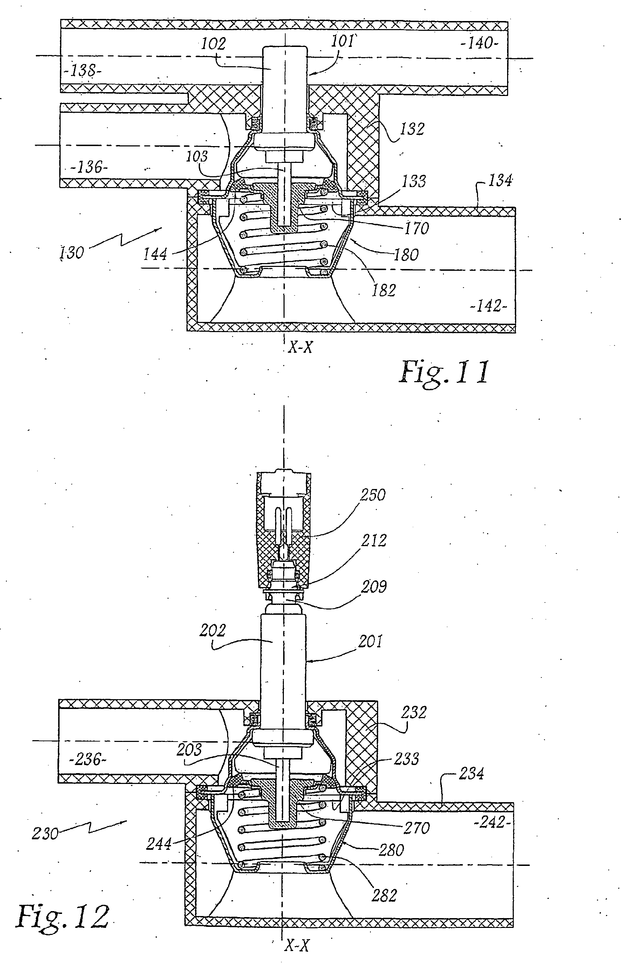

Sur les figures 11 à 14 sont représentées d'autres variantes de vannes, thermostatiques selon l'invention, référencées respectivement 130, 230, 330 et 430, les éléments de ces vannes en commun avec ceux de la vanne 30 de la figure 4 étant référencés par le même numéro augmenté de respectivement 100, 200, 300 et 400. La vanne 130 de la figure 11 se distingue essentiellement de la vanne 30 par l'absence de commande électrique de l'élément thermostatique 1. Aussi, l'élément 101 est uniquement commandé par la température de la voie de fluide, notamment d'huile, circulant dans les conduits 138 et 140.

La vanne 230 de la figure 12 se distingue essentiellement de la vanne 30 par l'absence de commande de l'élément thermostatique 201 par la température du fluide dans lequel le corps 202 de l'élément pourrait baigner. De la sorte, les déplacements du piston 203 sont uniquement commandés par les moyens de chauffage 208, c'est-à-dire commandés électriquement depuis l'extérieur de la vanne. De plus, la retenue mécanique du connecteur 250 est exclusivement assurée par l'embase 212, le connecteur n'étant pas solidarisé au boîtier 232.

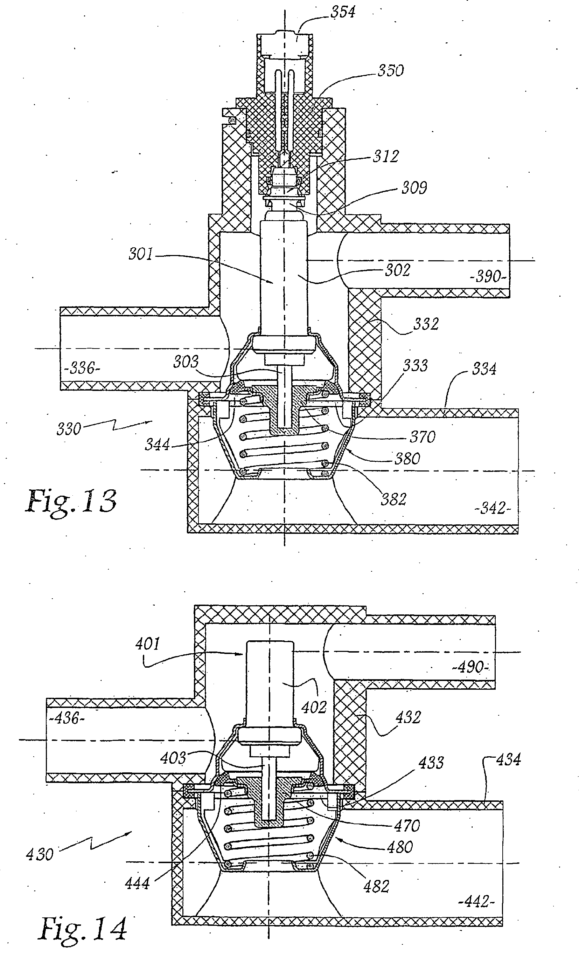

La vanne 330 de la figure 13 se distingue de la vanne 30 de la figure 4 par la suppression des conduits d'entrée et de sortie en huile au profit d'un second conduit 390 de sortie d'eau, qui communique directement avec le conduit d'entrée 336, le corps 302 de l'élément thermostatique 301 baignant dans l'écoulement du fluide passant du conduit 336 au conduit 390. L'élément thermostatique est de la sorte commandé par la température de ce fluide, ainsi qu'électriquement depuis le connecteur 350. La vanne 330 est par exemple utilisée pour répartir le débit d'eau de refroidissement en sortie d'un moteur thermique. La vanne répartit ce débit entre, d'une part, le conduit 342 destiné à être relié à un radiateur de refroidissement, et, d'autre part, le conduit 390 qui est destiné à être relié à des échangeurs auxiliaires, tels qu'un aérotherme de chauffage d'habitacle ou un échangeur thermique huile/eau. L'assemblage et le fonctionnement de la vanne 330 sont sensiblement analogues à ceux décrits pour la vanne 30.

La vanne 430 de la figure 14 se distingue essentiellement de la vanne 330 par l'absence de commande électrique de son élément thermostatique. L'élément 401 est uniquement commandé par la température de l'eau traversant la vanne par les conduits 436 et 490.

Divers aménagements et variantes aux vannes décrites ci-dessus sont en outre envisageables, notamment en combinant pour une même vanne des détails de réalisation ou d'assemblage décrits pour différentes vannes: Par exemple, des méplats analogues au méplat 76 du piston 3 de la vanne 30 peuvent être prévues pour les pistons 103, 203, 303 et 403 des vannes 130, 230, 330 et 430.

Une variante non représentée de la vanne 30 des figures 1 à 9 consiste à réaliser le clapet 44 et la pièce 70 d'un seul tenant. Plus précisément, dans ce cas, la pièce de liaison 70 est venue de matière avec une partie intérieure du clapet 44, ces éléments étant réalisés d'une pièce monobloc en métal ou en un matériau synthétique. Cette variante présente l'avantage de réduire le nombre de pièces de la vanne tandis que la réalisation des figures 1 à 9 permet d'utiliser un clapet pré-existant dont la couronne intérieure 72 peut servir de zone d'emmanchement pour, indifféremment, la pièce de liaison 70, comme décrit pour la vanne 30, ou le corps d'un élément thermostatique dans d'autres agencements de vannes connus.

Une autre variante non représentée dé la vanne 30 des figures 1 à 9 consiste à prévoir que le trou borgne 74 délimité dans la pièce de liaison 70 ne présente pas une section transversale rigoureusement circulaire mais de forme oblongue. De manière plus générale, le profil, en coupe transversale, de ce trou 74 peut être dimensionné pour recevoir le piston 44 et pour permettre le guidage coulissant entre le piston et la pièce 70, tout en ménageant, en une ou plusieurs zones suivant son contour, un jeu radial entre le piston et la paroi 74b du trou 74 de manière à délimiter entre ces éléments un espace libre analogue à l'espace 78, c'est-à-dire un espace permettant la communication fluidique entre le débouché du trou 74 sur l'extérieur et le fond 74a de ce trou 74. Dans ce cas, la présence du méplat 76 le long du piston 3 n'est plus indispensable puisque cet espace libre empêche l'effet ventouse ou le piégeage de fluide de manière analogue au méplat 76, comme expliqué plus haut.

## Revendications

1. Vanne thermostatique pour un circuit de refroidissement, notamment associé à un moteur thermique, comportant un boîtier principal (32 ; 132 ; 232 ; 332 ; 432) qui forme un orifice d'entrée (36 ; 136 ; 236 ; 336 ; 436) d'un fluide et au moins un orifice de sortie (33 ; 133 ; 233 ; 333 ; 433) de ce fluide, un clapet (44 ; 144 ; 244 ; 344 ; 444) mobile par rapport au boîtier et adapté pour réguler le passage du fluide entre l'orifice d'entrée et l'orifice de sortie, un siège (46 ; 146 ; 246 ; 346 ; 446) de réception du clapet, fixe par rapport au boîtier, et un élément thermostatique (1 ; 101 ; 201 ; 301 ; 401) pourvu d'un corps (2 ; 102 ; 202 ; 302 ; 402) qui contient une matière dilatable (4) et d'un piston (3 ; 103 ; 203 ; 303 ; 403) mobile par rapport au corps, ledit corps étant fixe par rapport au boîtier, **caractérisée en ce qu**'elle comporte une pièce (70 ; 170 ; 270 ; 370 ; 470) de liaison entre le clapet (44; 144 ; 244 ; 344 ; 444) et le piston (3 ; 103 ; 203 ; 303 ; 403), laquelle pièce de liaison est solidaire du clapet et délimite un logement borgne (74) de réception du piston, le fond (74a) du logement formant une butée pour le piston lorsque la différence de pression de part et d'autre du clapet est inférieure à une valeur prédéterminée, liant ainsi cinématiquement le clapet et le piston l'un à l'autre, tandis que la paroi (74b) du logement forme une surface de contact glissant avec le piston lorsque cette différence de pression est supérieure à ladite valeur prédéterminée, permettant ainsi le déplacement du clapet par rapport au piston suivant la direction (X-X) de déplacement du piston.

2. Vanne suivant la revendication 1, **caractérisée en ce que** ladite pièce de liaison (70 ; 170 ; 270 ; 370 ; 470) est emmanchée à force dans une couronne intérieure (72) du clapet (44 ; 144 ; 244 ; 344 ; 444).

3. Vanne suivant la revendication 1, **caractérisée en ce que** ladite pièce de liaison est venue de matière avec une partie intérieure du clapet.

4. Vanne suivant l'une quelconque des revendications précédentes, **caractérisée en ce qu**'elle comporte un ressort (82 ; 182 ; 282 ; 382 ; 482) de rappel du clapet (44 ; 144 ; 244 ; 344 ; 444) vers le siège (46 ; 146 ; 246 ; 346 ; 446), la valeur prédéterminée de pression étant fonction du réglage de ce ressort.

5. Vanne suivant l'une quelconque des revendications précédentes, **caractérisée en ce que** le piston (3) et là pièce de liaison (70 ; 170 ; 270 ; 370 ; 470) délimitent entre eux un espace libre (78) de communication fluidique entre le fond (74a) du logement borgne (74) et le débouché de ce logement sur l'extérieur.

6. Vanne suivant la revendication 5, **caractérisée en ce que** l'espace libre (78) est délimité en partie par un méplat (76) ménagé le long du piston (3).

7. Vanne suivant l'une quelconque des revendications précédentes, **caractérisée en ce qu**'elle comporte un étrier rigide (80 ; 180 ; 280 ; 380 ; 480) qui délimite le siège (46 ; 146 ; 246 ; 346 ; 446) de réception du clapet (44 ; 144 ; 244 ; 344 ; 444) et qui est solidarisé d'une part au boîtier principal (32 ; 132 ; 232 ; 332 ; 432) et d'autre part au corps (2 ; 102 ; 202 ; 302 ; 402) de l'élément thermostatique (1 ; 101 ; 201 ; 301 ; 401).

8. Vanne suivant la revendication 7, **caractérisée en ce qu**'elle comporte un boîtier secondaire (34; 134; 234 ; 334; 434) relié de façon étanche au boîtier principal au niveau d'un de ses orifices d'entrée ou de sortie (33 ; 133 ; 233 ; 333 ; 433), en enserrant une bride de solidarisation (80C) de l'étrier.

9. Vanne suivant la revendication 7, **caractérisée en ce qu**'elle comporte un couvercle (88) relié de façon étanché au boîtier principal (32) et adapté pour solidariser une bride (80C) de l'étrier (80) au boîtier principal.

10. Vanne suivant l'une quelconque des revendications précédentes, **caractérisée en ce que** le corps (302 ; 402) de l'élément thermostatique (301 ; 401) est disposé dans le boîtier principal (332 ; 432) sur le trajet d'écoulement du fluide entre l'orifice d'entrée (336 ; 436) de ce fluide et au moins un des orifices de sortie (333 ; 433) de ce fluide.

11. Vanne suivant l'une quelconque des revendications 1 à 9, **caractérisée en ce que** le boîtier principal (32 ; 132 ; 232) délimite une voie de circulation d'un fluide autre que celui régulé par le clapet (44 ; 144 ; 244), le corps (2 ; 102 ; 202) de l'élément thermostatique (1 ; 101 ; 201) étant disposé dans le boîtier principal sur le trajet de cet autre fluide.

12. Vanne suivant l'une quelconque des revendications précédentes, **caractérisée en ce qu**'elle comporte à la fois des moyens (8) de chauffage électrique, qui comprennent une enveloppe (9 ; 209 ; 309) plongée au moins en partie dans la matière dilatable (4) de l'élément thermostatique (1 ; 201 ; 301) et une résistance chauffante logée dans l'enveloppe et adaptée pour être connectée à une alimentation électrique, et une embase rapportée (12 ; 212 ; 312) de connexion électrique, adaptée pour positionner des plots (10) de connexion électrique de la résistance chauffante et solidarisée de façon étanche à l'enveloppe de telle sorte que l'ensemble thermostatique, incluant l'élément thermostatique, les moyens de chauffage et l'embase de connexion électrique, est dans une configuration pré-assembtée dans laquelle cet ensemble est apte à être monté d'un seul tenant dans le boîtier principal (32 ; 232 ; 332).

## Claims

1. Thermostatic valve for a coolant circuit, in particular associated with a combustion engine, comprising a principal housing (32; 132; 232; 332; 432), which forms an inlet opening (36; 136; 236; 336; 436) for a fluid and at least one outlet opening (33; 133; 233; 333; 433) for this fluid, a shutter (44; 144; 244; 344; 444), being mobile in relation to the housing and adapted for controlling the passage of the fluid between the inlet opening and the outlet opening, a seat (46; 146; 246, 346; 446) for receiving the shutter, being stationary in relation to the housing, and a thermostatic element (1; 101; 201; 301; 401) equipped with a body (2; 102; 202; 302; 402) which contains an expandable material (4) and a piston (3, 103, 203; 303; 403), being mobile in relation to the body; said body being stationary in relation to the housing, **characterized in that** it comprises a connecting element (70; 170; 270; 370; 470) between the shutter (44; 144; 244; 344; 444) and the piston (3; 103; 203; 303; 403), which connecting element is interlocked with the shutter and delimits a blind recess (74) for receiving the piston, the bottom (74a) of the recess forming a thrust for the piston when the difference in pressure on either side of the shutter is less than a pre-set value, thus kinematically joining the shutter and the piston to one another; while the wall (74b) of the recess forms a contact surface sliding with the piston, whenever this difference in pressure is more than said pre-set value, thus allowing the displacement of the shutter relative to the piston in the displacement direction (X-X) of the piston.

2. Valve according to claim 1, **characterized in that** said connecting element (70; 170; 270; 370; 470) is pressed home by force in an interior crown (72) of the shutter (44; 144; 244; 344; 444).

3. Valve according to claim 1, **characterized in that** said connecting element is cast in one piece with an interior part of the shutter.

4. Valve according to any one of the preceding claims, **characterized in that** it comprises a spring (82; 182; 282; 382; 482) of the shutter (44; 144; 244; 344; 444) towards the seat (46; 146; 246; 346; 446), the pre-set pressure value being a function of the adjustment of this spring.

5. Valve according to any one of the preceding claims, **characterized in that** the piston (3) and the connecting element (70; 170; 270; 370; 470) delimits, between them, a free space (78) for fluidic communication between the bottom (74a) of the blind recess (74) and the opening out of this recess towards the exterior.

6. Valve according to claim 5, **characterized in that** the free space (78) is partly delimited by a flat part (76) extending along the piston (3).

7. Valve according to any one of the preceding claims, **characterized in that** it comprises a rigid clamp (80; 180; 280; 380; 480) which delimits the seat'(46; 146; 246; 346; 446) for receiving the shutter (44; 144; 244; 344; 444) and which on the one hand is interlocked with the principal housing (32; 132; 232; 332; 432) and on other hand with the body (2; 102; 202; 302; 402) of the thermostatic element (1; 101; 201; 301; 401).

8. Valve according to claim 7, **characterized in that** it comprises a secondary housing (34; 134; 234; 334; 434) connected in a leak-tight manner to the principal housing at one of its inlet or outlet openings (33; 133; 233; 333; 433), while crimping an interlocking flange (80C) of the clamp.

9. Valve according to claim 7, **characterized in that** it comprises a lid (88) connected in a leak-tight manner to the principal housing (32) and adapted for interlocking a flange (80C) of the clamp (80) with the principal housing.

10. Valve according to any one of the preceding claims, **characterized in that** the body (302; 402) of the thermostatic element (301; 401) is arranged in the principal housing (332; 432) on the flow trajectory of the fluid between the inlet opening (336; 436) for this fluid and at least one of the outlet openings (333; 433) for this fluid.

11. Valve according to any one of claims 1 to 9, **characterized in that** the principal housing (32; 132; 232) delimits a circulation channel for a fluid other than that controlled by the shutter (44; 144; 244), the body (2; 102; 202) of the thermostatic element (1; 101; 201) being arranged in the principal housing on the trajectory of this other fluid.

12. Valve according to any one of the preceding claims, **characterized in that** it comprises both electric heating means (8) which comprise a casing (9; 209; 309) immersed at least partially in the expandable material (4) of the thermostatic element (1; 201; 301) and a heating element housed in the casing and adapted to be connected to an electrical supply and a separate electrical connector (12; 212; 312), adapted for positioning electrical contacts (10) of the heating element and interlocked in a sealed manner with the casing so that the thermostatic unit including the thermostatic element, the heating means and the electrical connector is in a pre-assembled configuration in which this assembly is able to be fitted with one operation in the principal housing (32; 232; 332).

## Patentansprüche

1. Thermostatventil für einen insbesondere einer Wärmekraftmaschine zugeordneten Kühlkreis, umfassend ein Hauptgehäuse (32; 132; 232; 332; 432), das eine Eintrittsöffnung (36; 136; 236; 336; 436) für ein Fluid und mindestens eine Austrittsöffnung (33; 133; 233; 333; 433) für dieses Fluid bildet, einen bezüglich des Gehäuses beweglichen Ventilkörper (44; 144; 244; 344; 444), der dafür ausgelegt ist, den Durchgang des Fluids zwischen der Eintrittsöffnung und der Austrittsöffnung zu regulieren, einen bezüglich des Gehäuses feststehenden Sitz (46; 146; 246; 346; 446) zur Aufnahme des Ventilkörpers und ein Thermostatelement (1; 101; 201; 301; 401), das mit einem Körper (2; 102; 202; 302; 402), der ein ausdehnbares Material (4) enthält, und mit einem bezüglich des Körpers beweglichen Kolben (3; 103; 203; 303; 403) versehen ist, wobei dieser Körper bezüglich des Gehäuses feststehend ist, **dadurch gekennzeichnet, dass** es ein Teil (70; 170; 270; 370; 470) zur Verbindung zwischen dem Ventilkörper (44; 144; 244; 344; 444) und dem Kolben (3; 103; 203; 303; 403) umfasst, das mit dem Ventilkörper fest verbunden ist und eine sacklochartige Aussparung (74) zur Aufnahme des Kolbens begrenzt, wobei der Boden (74a) der Aussparung einen Anschlag für den Kolben bildet, wenn die Druckdifferenz zu beiden Seiten des Ventilkörpers kleiner als ein vorbestimmter Wert ist, wodurch der Ventilkörper und der Kolben miteinander kinematisch verbunden sind, während die Wand (74b) der Aussparung eine gleitende Kontaktfläche mit dem Kolben bildet, wenn diese Druckdifferenz größer als dieser vorbestimmte Wert ist, was die Bewegung des Ventilkörpers bezüglich des Kolbens gemäß der Bewegungsrichtung (X-X) des Kolbens gestattet.

2. Ventil nach Anspruch 1, **dadurch gekennzeichnet, dass** das Verbindungsteil (70; 170; 270; 370; 470) in einen Innenkranz (72) des Ventilkörpers (44; 144; 244; 344; 444) eingepresst ist.

3. Ventil nach Anspruch 1, **dadurch gekennzeichnet, dass** das Verbindungsteil mit einem inneren Teil des Ventilkörpers aus einem Stück besteht.

4. Ventil nach einem der vorhergehenden Ansprüche, **dadurch gekennzeichnet, dass** es eine Feder (82; 182; 282; 382; 482) zur Rückholung des Ventilkörpers (44; 144; 244; 344; 444) zum Sitz (46; 146; 246; 346; 446) umfasst, wobei der vorbestimmte Druckwert von der Einstellung dieser Feder abhängig ist.

5. Ventil nach einem der vorhergehenden Ansprüche, **dadurch gekennzeichnet, dass** der Kolben (3) und das Verbindungsteil (70; 170; 270; 370; 470) miteinander einen freien Raum (78) zur Fluidverbindung zwischen dem Boden (74a) der sacklochartigen Aussparung (74) und der Mündung dieser Aussparung nach außen begrenzen.

6. Ventil nach Anspruch 5, **dadurch gekennzeichnet, dass** der freie Raum (78) zum Teil durch eine längs des Kolbens (3) vorgesehene Abflachung (76) gebildet ist.

7. Ventil nach einem der vorhergehenden Ansprüche, **dadurch gekennzeichnet, dass** es eine starre Buchse (80; 180; 280; 380; 480) umfasst, die den Sitz (46; 146; 246; 346; 446) zur Aufnahme des Ventilkörpers (44; 144; 244; 344; 444) bildet und einerseits an dem Hauptgehäuse (32; 132; 232; 332; 432) und andererseits an dem Körper (2; 102; 202; 302; 402) des Thermostatelements (1; 101; 201; 301; 401) befestigt ist.

8. Ventil nach Anspruch 7, **dadurch gekennzeichnet, dass** es ein Zusatzgehäuse (34; 134; 234; 334; 434) umfasst, das mit dem Hauptgehäuse auf Höhe einer seiner Eintritts- oder Austrittsöffnungen (33; 133; 233; 333; 433) dicht verbunden ist, indem es einen Befestigungsflansch (80C) der Buchse einschließt.

9. Ventil nach Anspruch 7, **dadurch gekennzeichnet, dass** es einen Deckel (88) umfasst, der mit dem Hauptgehäuse (32) dicht verbunden ist und dafür ausgelegt ist, einen Flansch (80C) der Buchse (80) mit dem Hauptgehäuse fest zu verbinden.

10. Ventil nach einem der vorhergehenden Ansprüche, **dadurch gekennzeichnet, dass** der Körper (302; 402) des Thermostatelements (301; 401) in dem Hauptgehäuse (332; 432) in dem Strömungsweg des Fluids zwischen der Eintrittsöffnung (336; 436) für dieses Fluid und mindestens einer der Austrittsöffnungen (333; 433) für dieses Fluid angeordnet ist.

11. Ventil nach einem der Ansprüche 1 bis 9, **dadurch gekennzeichnet, dass** das Hauptgehäuse (32; 132; 232) einen Umlaufweg für ein anderes Fluid als das durch den Ventilkörper (44; 144; 244) regulierte Fluid begrenzt, wobei der Körper (2; 102; 202) des Thermostatelements (1; 101; 201) in dem Hauptgehäuse in dem Weg dieses anderen Fluids angeordnet ist.

12. Ventil nach einem der vorhergehenden Ansprüche, **dadurch gekennzeichnet, dass** es gleichzeitig elektrische Heizmittel (8) umfasst, die eine Hülle (9; 209; 309), die mindestens zum Teil in das ausdehnbare Material (4) des Thermostatelements (1; 201; 301) eintaucht, und einen in der Hülle untergebrachten Heizwiderstand umfassen, der dafür ausgelegt ist, mit einer Stromversorgung verbunden zu sein, sowie einen angebrachten Stromanschlusssockel (12; 212; 312), der dafür ausgelegt ist, elektrische Verbindungsstücke (10) des Heizwiderstands zu positionieren, und an der Hülle dicht befestigt ist, so dass die Thermostateinheit, die das Thermostatelement, die Heizmittel und den Stromanschlusssockel umfasst, sich in einer vormontierten Anordnung befindet, in der diese Einheit dafür ausgelegt ist, einstückig in dem Hauptgehäuse (32; 232; 332) montiert zu werden.
